# EUROPEAN PATENT SPECIFICATION

(11) **EP 1 447 270 B1**
(45) Date of publication and mention of the grant of the patent: **30.11.2005**
(21) Application number: 04075126.5
(22) Date of filing: 19.01.2004
(51) Int. Cl.: B60P 3/34, E04F 10/06

(54) **Device for fixing an awning on the roof of a vehicle, veranda or the like**
Vorrichtung zur Befestigung einer Markise auf dem Dach eines Kraftfahrzeuges, Veranda oder ähnliche
Dispositif pour le montage d'une marquise sur le toit d'un véhicule automobile, véranda ou similaire

(30) Priority: 13.02.2003 BE 200300099
(43) Date of publication of application: 18.08.2004
(73) Proprietor: BRUSTOR, N.V., 8940 Geluwe (BE)
(72) Inventor: Brutsaert, Louis, 8930 Menen (BE)
(74) Representative: Donné, Eddy

(56) References cited:
- DE-A- 19 731 898
- US-B1- 6 361 011

## Description

The present invention concerns a device for fixing an awning on the roof of a vehicle, veranda or the like. Document US 6 361 011 describes a device according to the preamble of claim 1.

Such devices are already known whereby the awning is provided in an adjustable manner on carriages which are provided in a slidable manner on rails on the roof of a vehicle, a veranda or the like.

The invention aims a device for fixing an awning which has a very simple construction and which allows for a large number of setting possibilities to adjust the position of the awning.

To this aim, the present invention concerns a device for fixing an awning on the roof of a vehicle, veranda or the like, in particular on two rails, whereby a carriage which can be moved according to the longitudinal direction is provided on every rail, whereby every carriage is provided with at least one passage forming a guide in which is mounted a pivot such that it can slide and rotate, which pivot is provided with a crosswise directed threaded hole, and whereby, on every carriage, is provided at least one support for an awning, whereby this support is fixed on a carriage by means of a bolt passing through a hole in the support and which works in conjunction with the threaded hole in the pivot.

In order to better explain the characteristics of the invention, the following preferred embodiments are described as an example only without being limitative in any way, with reference to the accompanying drawings, in which:
figure 1 represents a view in perspective of a roof of a vehicle upon which is fixed an awning by means of a device according to the invention;
figure 2 represents the part indicated by F2 in figure 1 to a larger scale;
figure 3 represents a section according to line III-III in figure 2;

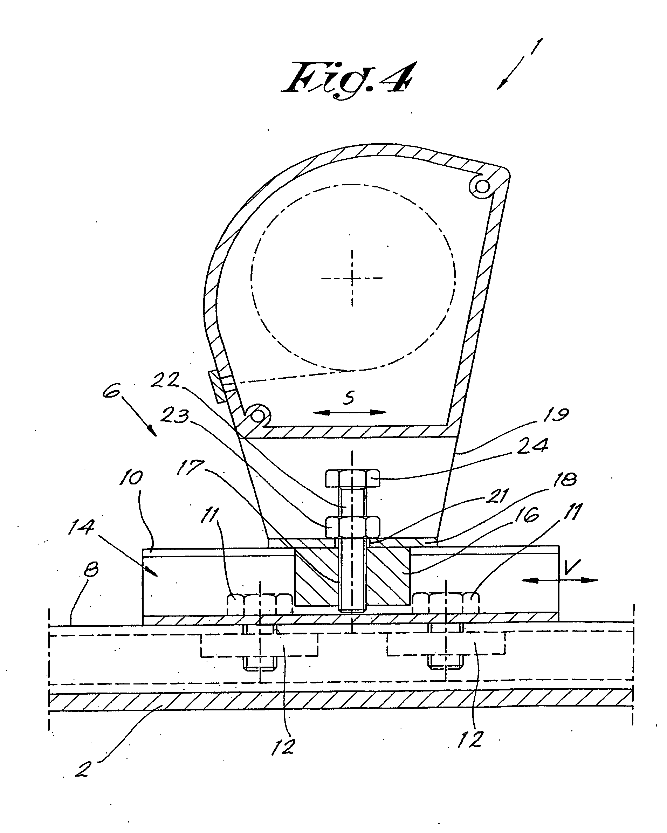

figure 4 represents a section according to line IV-IV in figure 3;
figure 5 represents a view similar to that in figure 1, whereby two awnings are simultaneously provided on the roof of a vehicle, next to one another;
figure 6 represents a section according to line VI-VI in figure 5 to a larger scale;
figure 7 represents a view in perspective of a veranda upon which are fixed two awnings by means of a device according to the invention.

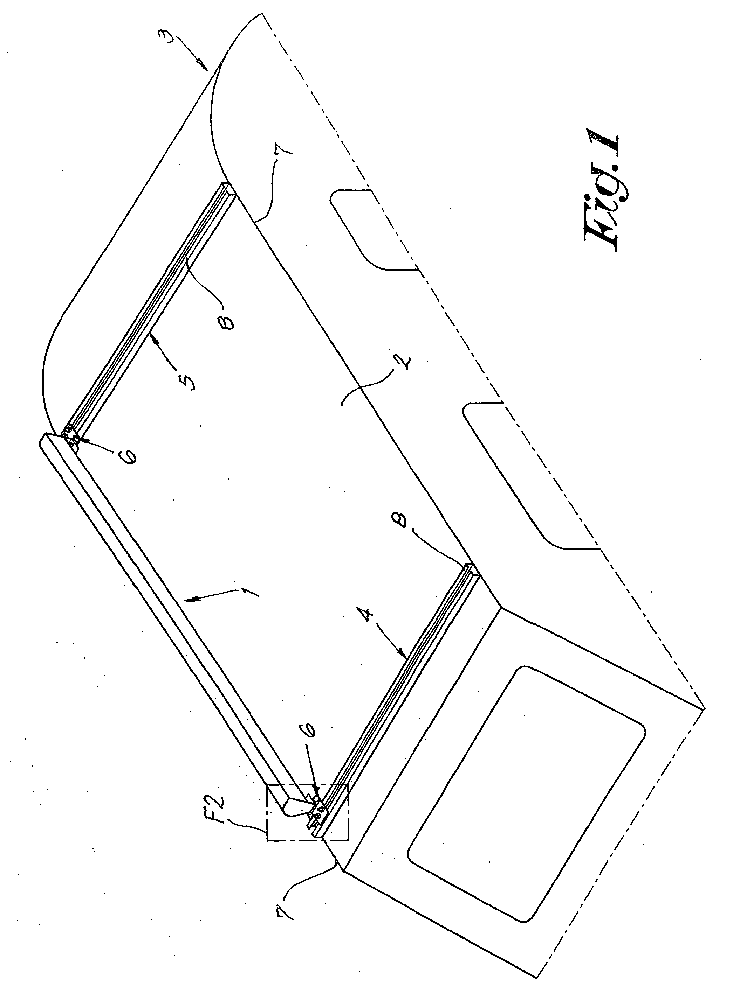

Figure 1 represents a device according to the invention for fixing a collapsible awning 1 on the roof 2 of a vehicle 3, such as a caravan, mobile home or the like, by means of, in this case, two rails 4-5 over which carriages 6 are provided in a slidable manner.

The rails 4-5 are fixed on the roof 2 in any suitable manner whatsoever, preferably at right angles to the roof edges 7.

In the given example, the rails 4-5 are formed of tubular struts with rectangular sections which have a longitudinal groove 9 in their upper wall 8.

The carriages 6 are mainly formed of a strut with a body 10 resting on the upper wall 8 of the rail 4 concerned and which is clamped in a suitable manner onto said rail 4 by means of two bolts 11 which work in conjunction with a nut 12 which fits exactly in a rail 4-5.

On the body 10 of the carriage 6 is provided a tubular part 13 with a circular section, which part 13 defines a passage 14 in which has been provided a longitudinal groove 15 extending over a certain angle α and whose bisector X-X' is directed slantingly upward in relation to the body 10 of the carriage 6.

In the passage 14 is mounted a cylindrical pivot 16, whose diameter D is larger than the width B of the groove 15 of the passage 14.

The pivot 16 is provided with a crosswise directed, preferably radially directed threaded hole 17.

To the carriage 6 is connected a support 18 which in this case is fixed to the far ends 19 of the housing of an awning 1 by means of screws 20 or the like, whereby a hole 21, preferably a slotted hole, is provided in the support 18 which is mainly parallel to the longitudinal direction of the awning 1.

The mounting of an awning 1 by means of a device according to the invention is very simple and as follows.

First, on the rails 4-5 which are fixed diagonally in a suitable manner on the roof 2 of a vehicle, at a mutual distance which is practically equal to the centre distance between the supports 18 of the awning 1, the above-mentioned carriages 6 are connected to the rails 4-5 in a desired position by means of bolts 11 and nuts 12, for example at an equal distance from the roof edge 7.

Afterwards, the above-mentioned pivots 16 are pushed in the passages 14 of the carriages 6 concerned, whereby one has to take care that the threaded hole 17 in the pivots 16 remains accessible via the groove 15 of the passages 14.

In the given example, the supports 18 form a whole with the end parts of the awning 1.

In order to provide an awning 1 on a roof 2, every support 18 is fixed to a carriage 6 by means of a bolt 22 with a nut 23, whereby this bolt 22 passes through the slotted hole 21 in the support 18 and works in conjunction with the threaded hole 17 of the pivot 16 concerned.

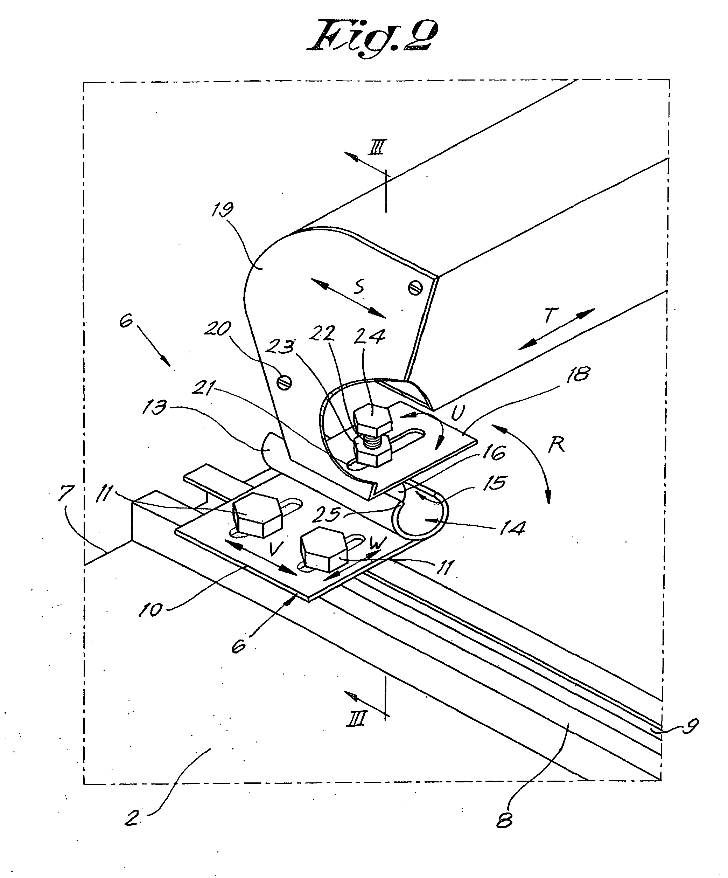

The dimensions of the above-mentioned bolt 22 are selected such that the diameter of the bolt is considerably smaller than the width B of the groove 15 of the passage 14 on the one hand, such that the pivot 16, together with the bolt 22, can rotate at least over a certain angle in the passage 14 of the carriage 6, in particular, as represented by the double arrow R in figure 2, and the length L of the threaded part of the bolt 22 is larger than the sum of the diameter D of the pivot 16, the thickness E of the foot 20 of the support 18 and the thickness F of the nut 23 on the other hand, such that, when the bolt 22 is screwed with its tip against an inner wall of the passage 14, the thread of the bolt 22 will still be free over a certain length.

At this stage of the mounting of the awning 1, the bolt 22 and the nut 23 are not screwed down yet, such that it is still possible to position the awning 1 in a required position, according to different possible directions, as represented by the double arrows R-S-T-U in figure 2, whereby every support 18 in particular can be rotated, according to arrow R respectively, by rotating the pivot 16 together with the bolt 22 in the passage 14; can be moved according to arrow S in the direction of the rails 4-5 by shifting the pivot 16 in the passage 14 of the carriage 6; can be shifted according to arrow T in the longitudinal direction of the awning 1 thanks to the slotted hole 21 in the support 18; and finally, can be rotated around the bolt 22 according to arrow U.

Also the carriages 6 themselves can be moved on the rails 4-5 in the direction of the double arrow V in figure 2, and in the direction of the double arrow W when passages in the carriages through which the bolts 11 have been provided, are also slotted holes.

In this manner, the awning 1 can be perfectly positioned in order to provide a suitable position to the housing of the awning 1.

Once the awning 1 has been positioned, the supports 18 are clamped one after the other in a very simple manner on the carriage 6 concerned.

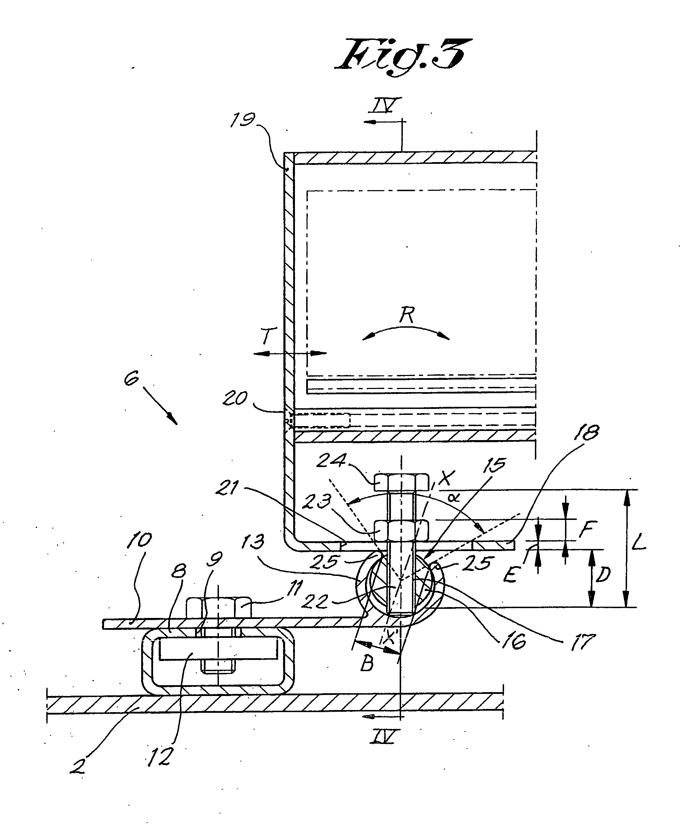

To this end, as represented in figure 3, for every support 18, the bolt 22 concerned is screwed tight up against the wall of the passage 14 of the carriage 6 in order to lock the pivot 16 in the passage 14 in this manner, after which the nut 23 is screwed down on the bolt 22 towards the carriage 6 in order to clamp the support 18 against the carriage 6.

Thus, the awning 1 is fixed in a very simple manner in a required position on the roof 2 of a vehicle 3.

It is clear that, according to a variant which is not represented, it is possible to clamp the supports 18 on the carriages 6 without making use of a nut 23, whereby, in this case, a shorter bolt 22 is applied which cannot be screwed down against the bottom of the passage 14.

In this case, the blocking of the pivot 16 in the passage 14 of the carriage 6 is only obtained in that, when the bolt 22 is screwed down, the pivot 16 is clamped against the edges 25 of the opening 15 of the passage 14.

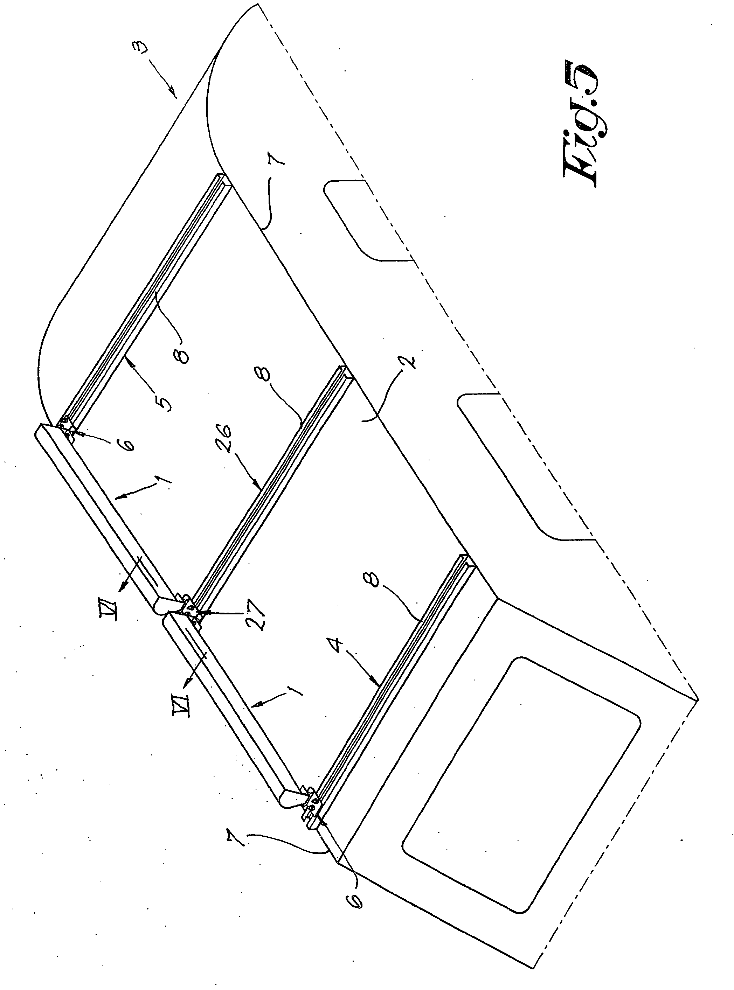

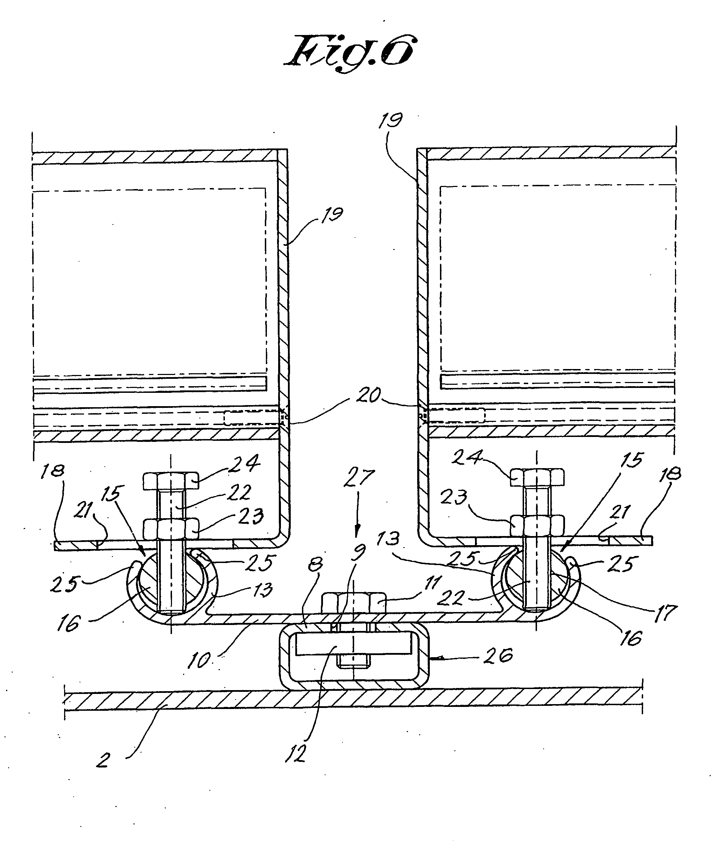

Figures 5 and 6 represent a variant of a device according to the invention, whereby in this case two awnings 1 are applied next to each other along a roof edge 7 of a vehicle 3.

To this end, an additional rail 26 is provided on the roof 2 of the vehicle 3 between the rails 4-5, whereby an additional carriage 27 is provided on this rail 26 with two parallel passages 14, and whereby a pivot 16 is provided with a bolt 22 in every passage 14, for fixing the adjacent supports 18 of the awnings 1 respectively.

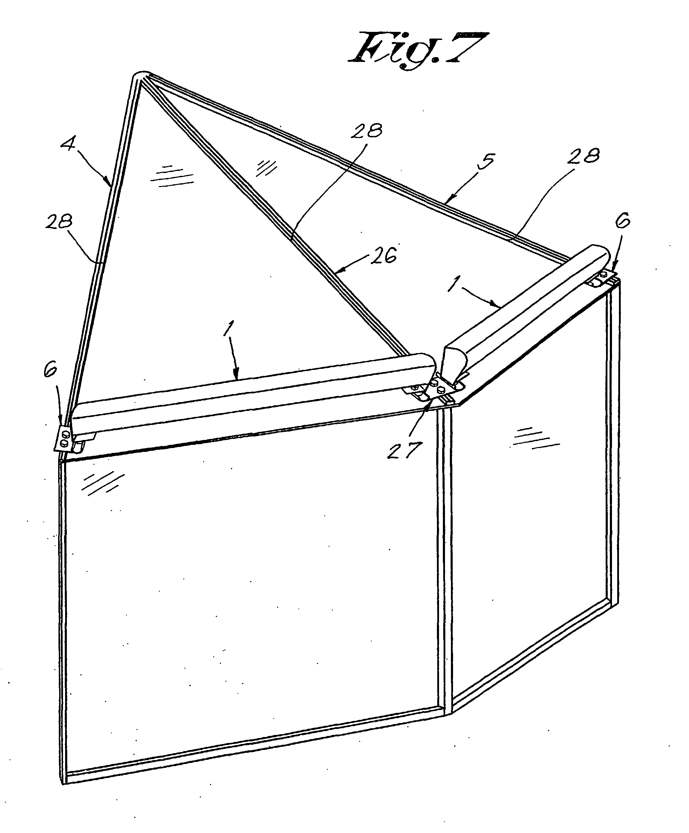

Figure 7 represents an application whereby, in the same manner as in figure 5, two awnings are provided next to each other, in this case on the cupola of a veranda, whereby in particular the above-mentioned rails 4-5-26 are in this case part of the upward directed posts 28 of the veranda.

The invention is by no means limited to the above-described embodiments given as an example and represented in the accompanying drawings; on the contrary, such a device according to the invention can be made in all sorts of shapes and dimensions while still remaining within the scope of the invention.

## Claims

1. Device for fixing an awning on the roof of a vehicle, veranda or the like on rails, in particular on two rails (4-5), whereby a carriage (6) which can be moved in the longitudinal direction of the rail, is provided on each rail (4-5), **characterised in that** each carriage (6) is provided with at least one passage (14) forming a guide in which is mounted a pivot (16) such that it can slide and rotate, which pivot (16) is provided with a crosswise directed threaded hole (17), and whereby, on each carriage (6), is provided at least one support (18) for an awning (1), whereby this support (18) is fixed on a carriage (6) by means of a bolt (22) passing through a hole (21) in the support (18) and which works in conjunction with the threaded hole (17) in the pivot (16).

2. Device according to claim 1, **characterised in that** the above-mentioned passage (14) in the carriage (6) is parallel or almost parallel to the above-mentioned rails (4-5).

3. Device according to claim 1, **characterised in that** the passage (14) is provided with an upward directed groove (15).

4. Device according to claim 1, **characterised in that** the passage (14) of the carriage (6) is formed of a tubular part (13) which has a mainly circular cross section and which has a longitudinal groove (15) extending over a certain angle (α).

5. Device according to claim 4, **characterised in that** the bisector (X-X') of the above-mentioned angle (α) of the groove (15) is directed slantingly upward in relation to the body (10) of the carriage (6).

6. Device according to claim 3, **characterised in that** the pivot (16) has a diameter (D) which is larger than the width (B) of the groove (15) of the passage (14).

7. Device according to claim 3, **characterised in that** the diameter of the bolt (22) is smaller than the width (B) of the groove (15) of the passage (14), such that the pivot (16) can be rotated together with the bolt (22) at least over a certain angle in the passage (14) of the carriage (6).

8. Device according to claim 1, **characterised in that** the hole (21) in the support (18) is a slotted hole.

9. Device according to claim 1, **characterised in that**, on the above-mentioned bolt (22), is screwed a nut (23) situated between the support (18) and the head (24) of the.bolt (22).

10. Device according to claim 9, **characterised in that** the length (L) of the threaded part of the bolt (22) is larger than the sum of the diameter (D) of the pivot (16), the thickness (E) of the support (18) and the thickness (F) of the nut (23).

## Patentansprüche

1. Vorrichtung zum Befestigen einer Markise auf dem Dach eines Fahrzeugs, einer Veranda oder dergleichen auf Schienen, insbesondere zwei Schienen (4-5), wobei ein Schlitten (6), der in Längsrichtung der Schiene bewegt werden kann, auf jeder Schiene (4-5) bereitgestellt ist, **dadurch gekennzeichnet, dass** jeder Schlitten (6) mit wenigstens einem Durchgang (14) versehen ist, der eine Führung bildet, in der ein Zapfen (16) so montiert ist, dass er gleiten und drehen kann, welcher Zapfen (16) mit einer quer gerichteten Gewindebohrung (17) versehen ist und wobei auf dem Schlitten (6) jeweils wenigstens ein Träger (18) für eine Markise (1) bereitgestellt ist, wobei dieser Träger (18) auf einem Schlitten (6) mittels einer Schraube (22) befestigt ist, die durch eine Bohrung (21) in dem Träger (18) geht und die in Verbindung mit der Gewindebohrung (17) in dem Zapfen (16) arbeitet.

2. Vorrichtung nach Anspruch 1, **dadurch gekennzeichnet, dass** der oben genannte Durchgang (14) in dem Schlitten (6) parallel oder fast parallel zu den oben genannten Schienen (4-5) ist.

3. Vorrichtung nach Anspruch 1, **dadurch gekennzeichnet, dass** der Durchgang (14) mit einer aufwärts gerichteten Rille (15) versehen ist.

4. Vorrichtung nach Anspruch 1, **dadurch gekennzeichnet, dass** der Durchgang (14) des Schlittens (6) von einem röhrenförmigen Teil (13) gebildet ist, das einen hauptsächlich kreisförmigen Querschnitt aufweist und das eine Längsrille (15) aufweist, die über einen bestimmten Winkel (α) verläuft.

5. Vorrichtung nach Anspruch 4, **dadurch gekennzeichnet, dass** die Winkelhalbierende (X-X') des oben genannten Winkels (α) der Rille (15) schräg aufwärts in Bezug auf den Körper (10) des Schlittens (6) gerichtet ist.

6. Vorrichtung nach Anspruch 3, **dadurch gekennzeichnet, dass** der Zapfen (16) einen Durchmesser (D) aufweist, der größer ist als die Breite (18) der Rille (15) des Durchgangs (14).

7. Vorrichtung nach Anspruch 3, **dadurch gekennzeichnet, dass** der Durchmesser der Schraube (22) kleiner ist als die Breite (B) der Rille (15) des Durchgangs (14), so dass der Zapfen (16) zusammen mit der Schraube (22) wenigstens über einen gewissen Winkel in dem Durchgang (14) des Wagens (6) gedreht werden kann.

8. Vorrichtung nach Anspruch 1, **dadurch gekennzeichnet, dass** die Bohrung (21) in dem Träger (18) eine Schlitzbohrung ist.

9. Vorrichtung nach Anspruch 1, **dadurch gekennzeichnet, dass** auf der oben genannten Schraube (22) eine Mutter (23), angeordnet zwischen dem Träger (18) und dem Kopf (24) der Schraube (22) verschraubt ist.

10. Vorrichtung nach Anspruch 9, **dadurch gekennzeichnet, dass** die Länge (L) des Gewindeteils der Schraube (22) größer ist als die Summe des Durchmessers (D) des Zapfens (16), der Dicke (E) des Trägers (18) und der Dicke (F) der Mutter (23).

## Revendications

1. Dispositif pour fixer une marquise sur le toit d'un véhicule, d'une véranda ou analogue sur des rails, en particulier sur deux rails (4-5), un chariot (6) qui peut se déplacer dans la direction longitudinale du rail étant prévu sur chaque rail (4-5), **caractérisé en ce que** chaque chariot (6) est muni d'au moins un passage (14) formant un guide dans lequel est monté un pivot (16) de façon à pouvoir coulisser et effectuer des rotations, ledit pivot (16) étant muni d'un trou taraudé (17) orienté en direction transversale, et au moins un support (18) pour une marquise (1) étant prévu sur chaque chariot (6), ce support (18) étant fixé sur le chariot (6) au moyen d'un boulon (22) passant à travers un trou (21) pratiqué dans le support (18) et qui travaille de manière conjointe avec le trou taraudé (17) pratiqué dans le pivot (16).

2. Dispositif selon la revendication 1, **caractérisé en ce que** le passage susmentionné (14) dans le chariot (6) est parallèle ou pratiquement parallèle aux rails susmentionnés (4-5).

3. Dispositif selon la revendication 1, **caractérisé en ce que** le passage (14) est muni d'une rainure (15) orientée vers le haut.

4. Dispositif selon la revendication 1, **caractérisé en ce que** le passage (14) du chariot (6) est réalisé à l'aide d'une partie tubulaire (13) qui possède une section transversale principalement circulaire et qui possède une rainure longitudinale (15) s'étendant en formant un certain angle (α).

5. Dispositif selon la revendication 4, **caractérisé en ce que** la bissectrice (X-X') de l'angle susmentionné (α) formée par la rainure (15) est orientée en inclinaison vers le haut par rapport au corps (10) du chariot (6).

6. Dispositif selon la revendication 3, **caractérisé en ce que** le pivot (16) possède un diamètre (D) qui est supérieur à la largeur (B) de la rainure (15) du passage (14).

7. Dispositif selon la revendication 3, **caractérisé en ce que** le diamètre du boulon (22) est inférieur à la largeur (B) de la rainure (15) du passage (14), de telle sorte que le pivot (16) est en mesure d'effectuer des rotations de manière conjointe avec le boulon (22) sur au moins un certain angle dans le passage (14) du chariot (6).

8. Dispositif selon la revendication 1, **caractérisé en ce que** le trou (21) pratiqué dans le support (18) est un trou en forme de fente.

9. Dispositif selon la revendication 1, **caractérisé en ce que**, sur le boulon susmentionné (22), est vissé un écrou (23) disposé entre le support (18) et la tête (24) du boulon (22).

10. Dispositif selon la revendication 9, **caractérisé en ce que** la longueur (L) de la partie filetée du boulon (22) est supérieure à la somme du diamètre (D) du pivot (16), de l'épaisseur (E) du support (18) et de l'épaisseur (F) de l'écrou (23).
